# EUROPÄISCHE PATENTSCHRIFT

(11) **EP 3 680 892 B1**
(45) Veröffentlichungstag und Bekanntmachung des Hinweises auf die Patenterteilung: **30.11.2022**
(21) Anmeldenummer: 20150378.6
(22) Anmeldetag: 06.01.2020
(51) Int. Cl.: G10G 5/00, F16G 11/10, F16G 11/14

(54) **VERSTELLBARE TRAGEVORRICHTUNG FÜR EIN MUSIKINSTRUMENT**
ADJUSTABLE SUPPORT DEVICE FOR A MUSICAL INSTRUMENT
DISPOSITIF DE SUPPORT RÉGLABLE POUR UN INSTRUMENT DE MUSIQUE

(30) Priorität: 09.01.2019 CH 142019
(43) Veröffentlichungstag der Anmeldung: 15.07.2020
(73) Patentinhaber: Jancic, Silvin, 5612 Villmergen (CH)
(72) Erfinder: Jancic, Silvin, 5612 Villmergen (CH)
(74) Vertreter: Prins Intellectual Property AG

(56) Entgegenhaltungen:
- DE-A1- 3 225 476
- KR-A- 20030 091 837
- US-A- 1 637 003
- US-A- 2 561 606
- US-A- 3 225 984

## Beschreibung

### Technisches Gebiet

Die Erfindung betrifft eine Vorrichtung zur Längenverstellung einer Kordel zum Tragen eines Musikinstruments, insbesondere eines Saxophons, einer BassKlarinette, einem Fagott oder eines ähnlichen Blasinstruments

### Stand der Technik

Ein Blasinstrument wie zum Beispiel ein Saxophon wird häufig aufgrund seines Gewichts durch eine Tragevorrichtung am Nacken oder an den Schultern getragen. Eine solche Tragevorrichtung umfasst einen Trageriemen, auch Tragegurt genannt, der um den Nacken gelegt wird oder ein Traggestell, das auf die Schultern gelegt wird, sowie eine Kordel, die einerseits am Trageriemen oder Gestell und anderseits mit einem Haken am Instrument befestigt wird. Ein Tragegestell wie erwähnt ist zum Beispiel in CH 704201 offenbart. Ein Trageriemen oder Traggestell mit einer Kordel ermöglicht das Spielen eines schweren Instruments über eine längere Zeitdauer, ohne dass der Musiker allzu sehr ermüdet.

Eine Kordel für eine solche Tragevorrichtung ist zum Beispiel am Haken doppelt geschlungen, wie zum Beispiel in US 1,637,003 offenbart, wobei die Doppelschlinge über einen Schieber führt. Der Schieber kann auf und ab verschoben werden, wodurch die Länge der Doppelschlinge und die Höhenposition des Instruments variiert wird. Der Schieber umfasst ein quaderförmiges Element, das zusammen mit einer Feder in einem becherförmigen Element platziert ist. Das quaderförmige und das becherförmige Element enthalten je eine Öffnung, durch die sich drei Teilstücke der Kordel hindurchführen lassen, wobei die drei Teilstücke sich in der Öffnung gegenseitig berühren. Bei entspannter Feder überlappen die Öffnungen nur teilweise, sodass die Teilstücke der Kordel dort eingeklemmt sind. Der Schieber wird zwischen Daumen und Finger gehalten, und um die Länge der Kordel zu verändern werden Daumen und Finger zusammengedrückt, sodass das quaderförmige Element gegen die Federkraft in das becherförmige Element hineingepresst wird und sich die beiden Öffnungen mehr überlappen. Dabei haben die Kordelteilstücke in der Öffnung mehr Bewegungsspiel und der Schieber lässt sich entlang der Kordel verschieben. Werden Daumen und Finger wieder entlastet, so verengt sich die Öffnung und die Kordelteilstücke werden in der verkleinerten Öffnung aneinander gepresst und der Schieber wird dadurch arretiert.

KR 2003 0091 837 offenbart eine Vorrichtung zur Haltung eines Identifikationsschilds oder elektronischen Geräts wie ein Mobiltelefon mit zwei Schnüren und einer Längenjustierung. Die Justierung umfasst ein Gehäuse, einen darin eingesetzten Knopf und eine dazwischen platzierte Feder. Die Schnüre sind an ihren Enden am Gehäuse durch ein Stoppelement fixiert, durch Ösen einer Haltevorrichtung und durch Öffnungen ins Gehäuse hinein-, durch einen Freiraum zwischen Gehäuse und dem darin platzierten Knopf und durch Öffnungen im Gehäuse wieder herausgeführt. Eine gewählte Länge der Schnüre wird durch Klemmung der Schnüre zwischen den Öffnungen im Gehäuse und dem Boden des Knopfes eingestellt.

DE 32 25 476 offenbart einen längenverstellbaren Halter für Musikinstrumente mit einer Kordel die um den Hals eines Musikers gelegt wird. Der Halter umfasst ein Gleitstück, durch die zwei Kordeln geführt werden, deren Enden im Gleitstück mit einer Verknotung fixiert sind. Die Kordeln sind zudem durch Ringschleifen in einem Schliessstück geführt, das an einem Musikinstrument befestigt werden kann. Das Gleitstück umfasst zwei Kanäle, durch die Kordelabschnitte geführt sind sowie anschliessend einem der Kanäle eine Ringschlaufe, durch die eines der Kordelstücke unter Reibung geführt ist. Diese Reibung führt zur Fixierung der Lage des Gleitstücks, wenn ein Musikinstrument angehängt ist.
US 2,561,606 offenbart einen Halter für ein Saxophon mit einer Kordel bestehend aus einer Kette von Kügelchen und einem Clip zu dessen Längenverstellung. Die Kette wird durch Öffnungen am oberen und unteren Ende des Clips geführt und bildet eine Schleife in einem Gehäuse an dessen Rückseite. Sie ist zwischen dem Clip und Ösen eines Hakens für ein Musikinstrument vierfach geführt. Der Halter wird in bestimmter Länge gehalten, indem Greifer des Clips einen Draht zwischen den Kügelchen der Kette klemmen.

US 3,225,984 offenbart einen längenverstellbaren Halter für ein Saxophon mit einem Band, das durch ein Gehäuse geführt und dort mittels eines Pins fixiert wird. Eine bestimmte Länge des Halters wird durch Greifer mit Zinken, die unter der Spannkraft einer Feder beidseits in die Flächen des Bands greifen. Die Greifer werden mittels durch Zusammendrücken der Feder gelöst.

Andere auf dem Markt erhältliche Verstell- und Klemmvorrichtungen für Kordeln für Instrumente sind so eingestellt, indem die Schlinge der Kordel durch das Verstellelement sehr fest gehalten wird, was ein ungewolltes Rutschen nach unten verhindert, eine Nachjustierung während des Spielens oder einer kurzen Spielpause hingegen erschwert.

Kordeln sind Rundkordeln oder Flachkordeln. Rundkordeln sind gezwirnt oder gedreht mit einem runden Querschnitt. Flachkordeln sind Kordeln mit einem langgestreckten Querschnitt wie dem eines Bands.

### Beschreibung der Erfindung

Es ist Aufgabe der Erfindung, eine Vorrichtung zur Längenverstellung einer Kordel zum Befestigen eines Musikinstruments an einer Tragevorrichtung zu schaffen, wobei eine solche Vorrichtung zur Längenverstellung einerseits ein leichtes Verstellen der Höhe des Instruments ermöglicht, jedoch ein ungewolltes Verrutschen der Vorrichtung und Herunterrutschen des Instruments möglichst verhindert.

Diese Aufgabe wird durch eine erste Vorrichtung gemäss Anspruch 1 und eine zweite, alternative Vorrichtung gemäss Anspruch 6 gelöst.

Die erste erfindungsgemässe Vorrichtung gemäss Anspruch 1 zur Längenverstellung einer Kordel ist zur Aufnahme einer doppelt und einfach geführten Kordel sowie zur Veränderung der Länge der so geführten Kordel ausgebildet. Die einfach geführte Kordel kann an einer Tragevorrichtung für ein Musikinstrument an Nacken oder Schultern befestigt werden, wobei die doppelt geführte Kordel mit einem Haken für das Musikinstrument verbunden werden kann.

Die erste Vorrichtung zur Längenverstellung einer Kordel weist zwei Teile auf, einen becherförmig ausgebildeten, ersten Teil und einen Einsatz als zweiten Teil, wobei die beiden Teile ineinander schiebbar sind und zwischen den beiden Teilen eine Feder angeordnet ist.

Gemäss der Erfindung weist der becherförmige, erste Teil einen Boden und einen umlaufenden Rand auf, wobei in seinem umlaufenden Rand eine erste Ausnehmung oder eine Eingangsöffnung zwecks Hindurchführung von zwei Kordelstücken sowie vier weitere Öffnungen für zwei Kordelstücke angeordnet sind. Die erste und zweite der vier Öffnungen sind beidseitig der genannten ersten Ausnehmung oder Eingangsöffnung angeordnet, und die dritte und vierte der vier Öffnungen sind gegenüberliegend der ersten und zweiten Öffnung im umlaufenden Rand angeordnet.

Der zweite Teil der Vorrichtung zur Längenverstellung einer Kordel ist als Einsatz in den becherförmigen, ersten Teil ausgebildet und weist eine Nut mit einer Kehrtwendung, auf, die durch einen umlaufenden Rand des Einsatzteils und einen Mittelteil gebildet wird. Die Kehrtwendung hat eine Form eines U oder eines O. Der umlaufende Rand des Einsatzes weist eine zweite Ausnehmung auf, die in die Nut hineinführt. Die Nut dient der Aufnahme mindestens eines Kordelstücks, das durch die zweite Ausnehmung in die Nut hinein, entlang der Nut mit der Wendung und wiederum durch die Ausnehmung aus der Nut heraus geführt werden kann. Das so geführte Kordelstück bildet so, gemäss der Nut, die Form der Kehrtwendung. Der Einsatz weist zudem zwei als Kanäle ausgebildete Führungsnuten für je ein Kordelstück auf, die an der Aussenseite des umlaufenden Rands des Einsatzes und beidseits der zweiten Ausnehmung angeordnet sind und jeweils von einem Eingang neben der zweiten Ausnehmung, d.h. je seitlich neben der zweiten Ausnehmung, zu einem jeweils dem Eingang gegenüberliegenden Ausgang führt. Die Führungsnuten weisen jeweils Elemente zur Umlenkung und zur Hemmung der Bewegung einer Kordel auf und ist von der Nut mit der Kehrtwendung vollständig getrennt. D.h. die erste Ausnehmung oder Eingangsöffnung, die zur Nut mit der Kehrtwendung führt, ist vollständig von den Eingängen zu den seitlichen Führungsnuten getrennt.

Zudem sind die Ausnehmungen und die vier Öffnungen so angeordnet, dass die Position der zweiten Ausnehmung im Einsatz mit der Position der ersten Ausnehmung im becherförmigen Teil übereinstimmt und die Positionen der vier Öffnungen im becherförmigen Teil mit den Positionen der Eingänge und Ausgänge der seitlichen Führungsnuten im Einsatz übereinstimmen.

Diese Ausführung eignet sich für die Längenverstellung von Kordeln mit einem runden sowie langegestreckten Querschnitt.

In einer Ausführung der Erfindung weist der Einsatz in seinem Mittelteil eine Ausnehmung zur Aufnahme der Feder auf.

In einer Ausführung der Erfindung sind die Elemente zur Hemmung der Bewegung einer Kordel durch die Führungsnuten durch zueinander angewinkelte Flächen ausgebildet. Die zueinander angewinkelten Flächen können in einer Spitze aufeinander treffen oder durch eine weitere Fläche miteinander verbunden sein. Diese Elemente lenken eine Kordel in der Führungsnut in der Art eines einfachen Zick-Zacks um und bewirken auf diese Weise eine Reibung der Kordel an den Führungsnuten, wodurch die Bewegung der Kordel gehemmt wird. Wird die Vorrichtung wie im Gebrauch mit einem Musikinstrument so gehalten, dass die Kordeln vertikal hängen, so bewirken die Umlenkungselemente, dass die Kordeln in den Führungsnuten zuerst seitlich von der vertikalen Richtung weg und danach wieder zurückgeführt werden.

In einer weiteren Ausführung der Erfindung umfassen die Elemente zur Umlenkung und Hemmung der Bewegung einer Kordel durch die Führungsnuten Vorsprünge im becherförmigen, ersten Teil, die sich senkrecht vom inneren Boden des ersten Teils weg erstrecken, und zudem Ausnehmungen im Einsatz, die in dessen umlaufenden Rand angeordnet sind. Die Ausnehmungen im Einsatz sind entsprechend der Position der Vorsprünge im becherförmigen Teil angeordnet, dass beim Einführen des Einsatzes die Vorsprünge in die Ausnehmungen eingreifen, sich durch die Ausnehmungen hindurch erstrecken und in die Führungsnuten hineinragen. Die Vorsprünge in den Führungsnuten ergeben so eine Umlenkung von einer Kordel in der Führungsnut wiederum in der Art eines einfachen Zick-Zacks, zunächst in einem Winkel von der Vertikalen weg und danach wieder zurück.

In einer weiteren Ausführung weist der becherförmige Teil mittig einen Stift zur Fixierung der Position sowie Ausrichtung der Feder auf. Der Stift ist dabei entsprechend der Position der Ausnehmung im Einsatzteil positioniert, sodass bei einer Einführung des Einsatzes in den becherförmigen Teil der Stift in die Ausnehmung im Einsatz hineingeführt wird.

Für den Gebrauch der ersten Ausführung der erfindungsgemässen Vorrichtung zur Längenverstellung einer Kordel wird ein erstes Stück der Kordel in den Einsatz eingelegt, indem das Kordelstück in die Nut mit der Wendung gelegt wird und deren Enden durch die Ausnehmung aus dem Einsatz hinausführen. Die Enden werden sodann an einem Haken befestigt, der an einem Instrument angebracht werden kann, beispielsweise indem die Enden durch eine Öse am Haken geführt werden. Der Einsatz mit der Kordel in der Nut mit Kehrtwendung wird sodann in den becherförmigen, ersten Teil eingesetzt, in welchem eine Feder platziert ist. Der Einsatzteil wird dabei so platziert, dass die Position der Ausnehmung mit den hinein- und herausführenden Kordelstücken mit der Position der Ausnehmung im becherförmigen, ersten Teil übereinstimmt und die Kordelstücke auch durch die Ausnehmung im ersten Teil hindurchführen. Die Ein- und Ausgänge der beiden seitlichen Führungsnuten im Einsatz stimmen dabei auch mit den vier Öffnungen im becherförmigen, ersten Teil überein. Darauf werden die beiden Enden der Kordel durch die Öffnungen im becherförmigen Teil und die Eingänge der seitlichen Führungsnuten im Einsatz hineingeführt, durch die Führungsnuten des Einsatzes, durch die Ausgänge der Führungsnuten und durch die gegenüberliegenden Öffnungen im becherförmigen Teil wieder aus der Vorrichtung zur Verstellung herausgeführt. Schliesslich werden die Enden der Kordel an einem Nackenband oder einer Tragevorrichtung für ein Musikinstrument befestigt.

Die Feder ist beispielsweise durch die Ausnehmung in der Mitte des Einsatzes sowie den Stift im becherförmigen Teil positioniert.

Die beiden Teile der Vorrichtung werden aufgrund der Positionierung der Kordel in den Führungsnuten und in den vier Öffnungen des becherförmigen Teils zusammengehalten. Die Kordelstücke werden dabei dank der Federkraft der Feder zwischen den Ein- und Ausgängen der Führungsnuten im Einsatz und dem Rand der Öffnungen im becherförmigen Teil festgeklemmt.

Zur Verstellung der Länge der Kordel wird der Einsatz tiefer in den becherförmigen Teil hineingestossen und dabei die Feder zusammengedrückt. Die Öffnungen im becherförmigen Teil stimmen dadurch mit den Öffnungen im Einsatz genau überein, sodass die Eingänge zu den Führungsnuten grösser werden und die Kordelstücke in den Führungsnuten frei beweglich sind. Darauf kann die Vorrichtung (aus der Sicht des Musikers) nach oben oder unten bewegt werden und die Länge der doppelt geführten Kordelstücke, d.h. der Kordelstücke zwischen der Vorrichtung und dem Haken am Musikinstrument, vergrössert bzw. verkleinert werden. Ist die gewünschte Länge gefunden, so wird der Druck auf die Vorrichtung gelöst, wodurch die Feder entspannt und der Einsatz wieder etwas aus dem becherförmigen Teil herausbewegt wird. Dabei werden die Ein- und Ausgänge der seitlichen Führungsnuten wieder verkleinert, indem die Ein- und Ausgänge im Einsatz nicht mehr genau mit den vier Öffnungen im becherförmigen Teil übereinstimmen und verengt werden.

Dabei werden die Ein- und Ausgänge der Führungsnuten für die einfach geführte Kordel wieder verengt, indem der Einsatzteil sich leicht aus dem becherförmigen Teil heraushebt und die Kordelstücke in den Öffnungen des becherförmigen Teils an deren Ränder gedrückt werden. Dadurch werden die Kordelstücke in den Öffnungen festgeklemmt und in Position gehalten wird. Die Kordelstücke werden also zwischen den Führungsnuten und dem Rand der vier Öffnungen im becherförmigen, ersten Teil eingeklemmt und arretiert. Die Länge der Kordel und die Position des Musikinstruments bleiben damit konstant.

Die zweite, alternative erfindungsgemässe Vorrichtung zur Längenverstellung eines Bands oder einer Flachkordel gemäss Anspruch 6 weist ebenfalls zwei Teile auf, einen becherförmig ausgebildeten, ersten Teil und einen Einsatz als zweiten Teil, wobei die beiden Teile ineinander schiebbar sind und zwischen den beiden Teilen eine Feder angeordnet ist.

Der becherförmige, erste Teil weist eine Eingangsöffnung zwecks Hindurchführung von zwei Bändern auf. Anstelle von vier weiteren Öffnungen am umlaufenden Rand des becherförmigen Teils, weist der becherförmige Teil jedoch nur zwei weitere Öffnungen auf. Davon ist eine Öffnung neben der Eingangsöffnung zwecks Hindurchführung von zwei Bändern angeordnet und die zweite Öffnung gegenüberliegend der ersten Öffnung am umlaufenden Rand des becherförmigen Teils angeordnet. Der zweite Teil der Vorrichtung, d.h. der Einsatz, weist nur einen als Durchgang ausgebildeten Kanal auf, der von einem Eingang neben der Ausnehmung zu einem dem Eingang gegenüberliegenden Ausgang führt. Der Durchgang weist Elemente zur Umlenkung und Hemmung der Bewegung von Kordeln oder von Bändern auf. Die Nut mit der Kehrtwendung ist wiederum vollständig vom Eingang des Kanals vollständig getrennt. D.h. die Ausnehmung, die zur Nut führt, ist vom Eingang zum Kanal getrennt.

Zudem weist der Einsatz einen Mittelteil zur Aufnahme der Feder auf, wobei übereinander gelegte Bänder oder Flachkordeln mittels jeweils an ihren freien Enden versehenem Loch über den Mittelteil platzierbar sind. Im Boden des becherförmigen Teils ist zudem eine Vertiefung angeordnet, in die der Mittelteil mit der Feder durch das Loch in den Bändern eingreift.

Diese Ausführung eignet sich für die Längenverstellung einer Flachkordel oder eines Bands.

In einer Ausführung der Erfindung sind die Elemente zur Hemmung der Bewegung einer Flachkordel oder eines Bands durch den Kanal durch zueinander angewinkelte Flächen ausgebildet. Die zueinander angewinkelten Flächen können in einer Spitze aufeinander treffen oder durch eine weitere Fläche miteinander verbunden sein. Der Winkel zwischen den Flächen beträgt mehr als 90°. Diese Elemente lenken eine Flachkordel oder ein Band im Durchgang in der Art eines einfachen Zick-Zacks um und bewirken auf diese Weise eine Reibung der Flachkordel oder eines Bands an den Flächen des Durchgangs, wodurch die Bewegung der Flachkordel oder des Bands gehemmt wird. Wird die Vorrichtung wie im Gebrauch mit einem Musikinstrument so gehalten, dass die Flachkordeln oder die Bänder vertikal hängen, so bewirken die Umlenkungselemente, dass die Flachkordeln oder die Bänder im Durchgang zuerst seitlich von der vertikalen Richtung weg und danach wieder zurückgelenkt werden.

In einer Ausführung weist der Einsatz in seinem Mittelteil eine Vertiefung zur Aufnahme der Feder auf.

Für den Gebrauch der zweiten Ausführung der erfindungsgemässen Vorrichtung zur Längenverstellung einer Flachkordel oder eines Bands werden beispielsweise zwei Bänder übereinander gelegt. Die Bänder sind nahe ihren freien Enden mit einem Loch versehen. Die freien Enden der beiden Bänder werden sodann von aussen durch die Eingangsöffnung im becherförmigen, ersten Teil hindurch geführt und so platziert, dass das Loch in den Bändern über einer Vertiefung im Boden des äusseren, becherförmigen Teils liegt. Darauf wird der Einsatz mit dem Mittelteil in den becherförmigen Teil eingesetzt, wobei der Mittelteil mit der Feder durch das Loch in den Bändern und in die Vertiefung eingreift. Die beiden Teile werden sodann ineinander gesetzt und mit der Feder zusammengedrückt. Die Position der Ausnehmung mit den herausführenden Bändern stimmt dann mit der Position der Eingangsöffnung im becherförmigen, ersten Teil überein, sodass die Bänder durch die Ausnehmung der Nut im Einsatzteil und durch die Eingangsöffnung im becherförmigen Teil gerade hindurch führen. Die aus der Vorrichtung herausragenden Bänder oder Flachkordeln werden sodann an einem Haken befestigt, der an einem Musikinstrument angebracht werden kann, beispielsweise indem die Enden durch eine Öse am Haken geführt werden. Darauf werden die Enden der übereinander gelegten Bänder oder Flachkordeln durch die erste Öffnung im becherförmigen Teil und den Eingang des Durchgangs im Einsatz hineingeführt, durch den Durchgang des Einsatzes, durch den Ausgang des Durchgangs und durch die gegenüberliegende zweite Öffnung im becherförmigen Teil wieder aus der Vorrichtung zur Längenverstellung herausgeführt. Hierzu sind die Öffnungen im Einsatz und im becherförmigen Teil länglich ausgebildet und dem Querschnitt eines Bands angepasst. Schliesslich werden die Enden der Bänder oder Flachkordeln an einem Nackenband oder einer Tragevorrichtung für ein Musikinstrument befestigt.

Die beiden Teile der Vorrichtung werden aufgrund der Positionierung der Bänder oder Flachkordeln im Durchgang und in den zwei Öffnungen des becherförmigen Teils zusammengehalten. Die Bänder oder Flachkordeln werden dabei dank der Federkraft der Feder zwischen dem Ein- und Ausgang des Durchgangs im Einsatz und dem Rand der Öffnungen im becherförmigen Teil festgeklemmt.

Zur Verstellung der Länge der Bänder oder Flachkordeln wird wie bei der Verwendung der ersten Ausführung der Erfindung der Einsatz tiefer in den becherförmigen Teil hineingestossen und dabei die Feder zusammengedrückt. Die Öffnungen im becherförmigen Teil stimmen dadurch mit den Öffnungen im Einsatz genau überein, sodass der Zugang zum Durchgang grösser wird und die Bänder im Durchgang frei beweglich sind. Darauf kann die Vorrichtung (aus der Sicht des Musikers) nach oben oder unten bewegt werden und die Länge der doppelt geführten Bänder oder Flachkordeln, d.h. der Bänder zwischen der Vorrichtung und dem Haken am Musikinstrument, vergrössert bzw. verkleinert werden. Ist die gewünschte Länge gefunden, so wird der Druck auf die Vorrichtung gelöst, wodurch die Feder entspannt und der Einsatz wieder etwas aus dem becherförmigen Teil herausbewegt wird. Dabei werden die Zugänge des Durchgangs wieder verkleinert, indem die Ein- und Ausgänge des Durchgangs im Einsatz nicht mehr genau mit den zwei Öffnungen im becherförmigen Teil übereinstimmen und verengt werden. Dabei werden die Ein- und Ausgänge der Führungsnuten für die einfach geführte Flachkordel wieder verengt, indem der Einsatzteil sich leicht aus dem becherförmigen Teil heraushebt und die Flachkordelstücke in den Öffnungen des becherförmigen Teils an deren Ränder gedrückt werden. Dadurch werden die Bänder in den Öffnungen festgeklemmt und in Position gehalten wird. Die Bänder werden also zwischen den Führungsnuten und dem Rand der zwei Öffnungen im becherförmigen, ersten Teil eingeklemmt und arretiert. Die Länge der Bänder oder Flachkordeln und die Position des Musikinstruments bleiben damit konstant.

Die erfindungsgemässe Vorrichtung hat den Vorteil über solchen des Standes der Technik, insbesondere US 1,637,003, dass die seitlichen Führungsnuten im Einsatzteil von der Nut mit der Wendung vollständig getrennt sind. So kommt das Kordelstück, das zur doppelten Führung der Bänder oder Flachkordeln in der mittigen Nut im Einsatz entlang einer Kehrtwendung verläuft, nicht in Kontakt mit den Band- oder Flachkordelstücken in den seitlichen Führungsnuten des Einsatzes. Die Band- oder Flachkordelstücke in den mehreren Nuten verlaufen so geordnet, bleiben voneinander unberührt und verbleiben in ihrer Richtungsorientierung stets gleich. Dies ermöglicht, dass die erfindungsgemässe Vorrichtung zum Musiker stets gleich orientiert bleibt und eine Verdrehung der Vorrichtung und der Kordel vermieden wird. Zudem erfordert die Verstellung der Länge der Bänder oder Flachkordeln weniger Kraftaufwand als bei einer Vorrichtung gemäss US 1,637,003. Die Benützung der Vorrichtung ist dadurch erleichtert und ermöglicht vermehrte Ruhe beim Musizieren.

Die Trennung der Führung des Kordelstücks in der Nut mit der Kehrtwendung und der Führung der Band- oder Flachkordelstücke in den Führungsnuten des Einsatzes bewirkt eine Stabilität bezüglich Verdrehung der Vorrichtung. Die Vorrichtung bleibt dank der Trennung der Kordelstücke in der gleichen Position, indem die Bodenfläche des becherförmigen Teils stets in der gleichen Ebene liegt. Der Musiker kann so die Vorrichtung leichter und zuverlässiger ergreifen. Die Benützung der Vorrichtung wird so vereinfacht und ruhiger.

Während des Spielens des Musikinstruments ist das Band oder die Flachkordel durch das Gewicht des Instruments gespannt. Dabei ermöglichen die Elemente zur Umlenkung und Hemmung der Bewegung des Bands oder der Flachkordel in den Führungsnuten durch Reibung die Stabilität der jeweils eingestellten Länge des Bands oder der Flachkordel. Wenn der Musiker hingegen das Instrument mit den Händen hochhält, ist das Band oder die Flachkordel nicht gespannt. In dieser Situation sorgt die federbewirkte Klemmung des Bands oder der Flachkordel zwischen dem Einsatz und dem becherförmigen Teil der Vorrichtung für die Stabilität der jeweils eingestellten Länge des Bands oder der Flachkordel. Die Vorrichtung ermöglicht, dass sich die Länge des Bands oder Flachkordel nicht selbständig verstellen kann, auch dann nicht, wenn das Band oder die Flachkordel nicht gespannt ist.

Die Bänder oder Flachkordelstücke werden nach Festlegung einer gewünschten Länge des Bands oder der Flachkordel durch die Elemente zur Umlenkung und Hemmung der Bewegung der Stücke des Bands oder Flachkordel sowie durch die Verengung der Ein- und Ausgänge der Führungsnuten an Ort gehalten. Das Band oder die Flachkordel löst sich so beim Musizieren nicht von selbst. Eine ungewollte Verlängerung kann sich nicht ereignen. Das Band oder die Flachkordel bleibt dank der Trennung der Stücke des Bands oder der Flachkordel durch die voneinander unabhängigen Führungsnuten im Einsatz auch länger und nach häufiger Längenverstellung unversehrt, weil die Stücke des Bands oder der Flachkordel sich nicht berühren und nicht aneinander reiben. Die erfindungsgemässe Vorrichtung kann so länger im Einsatz bleiben. Zacken, Widerhaken oder dergleichen in der Führung zum Festhalten des Bands oder der Flachkordel mittels Reibung sind nicht notwendig. Ein frühzeitiges Ausfransen des Bands oder der Flachkordel kann dadurch vermieden werden.

Die erfindungsgemässe Vorrichtung eignet sich für eine Verwendung mit verschiedenen Typen von Tragevorrichtungen für Musikinstrumente umfassend Tragevorrichtungen mit Trageriemen (Tragegurt) um den Nacken sowie Tragevorrichtungen mit einem Tragegestell, das auf den Schultern getragen, an dem die Kordelstücke befestigt werden können.

Die Vorrichtung eignet sich insbesondere für Blasinstrumente wie Saxophon, Bassklarinette und Fagott.

Es wird zudem eine Tragevorrichtung für das Tragen eines Musikinstruments offenbart mit einem Trageriemen für den Nacken oder ein Tragegestell für Schultern, einer Kordel, einer Befestigung der Kordel am Musikinstrument, wobei die Tragevorrichtung eine erfindungsgemässe erste Vorrichtung zur Längenverstellung der Kordel wie beschrieben aufweist.

Eine Ausführung der Tragevorrichtung weist zur Befestigung der Kordel am Musikinstrument einen Haken mit einer Öse auf.

Es wird zudem eine Tragevorrichtung für das Tragen eines Musikinstruments offenbart mit einem Trageriemen für den Nacken oder ein Tragegestell für Schultern, einem Band, das jeweils ein Loch an den freien Enden aufweist, sowie einer Befestigung des Bands am Musikinstrument, wobei die Tragevorrichtung eine erfindungsgemässe zweite Vorrichtung zur Längenverstellung des Bands wie beschrieben aufweist.

Weitere Vorteile der Erfindung folgen aus der nachfolgenden Beschreibung, in welcher die Erfindung anhand von zwei in den schematischen Zeichnungen dargestellten Ausführungsbeispielen näher erläutert wird.

### Kurze Beschreibung der Figuren

Es zeigen:
Figuren 1-14 die erste Ausführung der Erfindung.
Figuren 15-21 die zweite Ausführung der Erfindung.

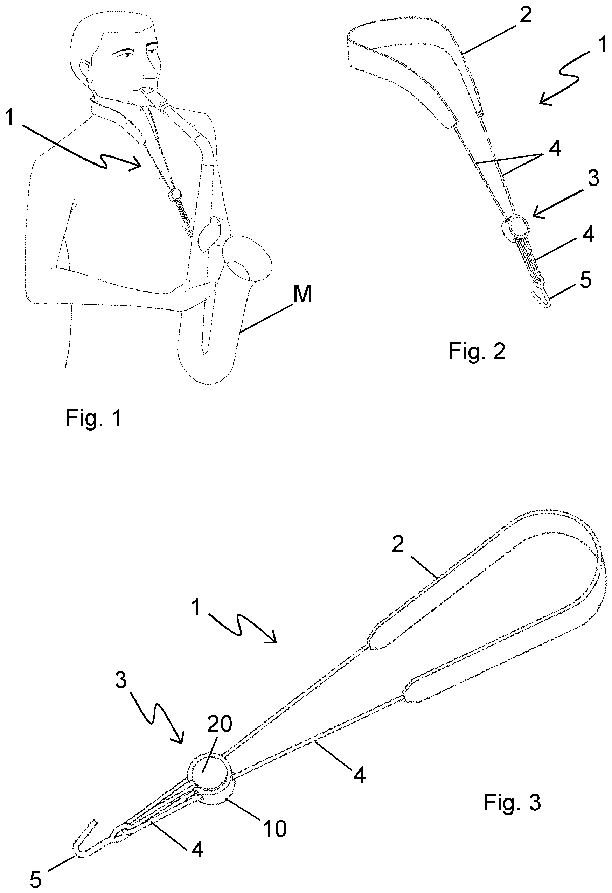

Fig. 1 einen Musiker mit einer Tragevorrichtung zum Tragen eines Blasinstruments wie zum Beispiel eines Saxophons, an der eine erste Ausführung der Vorrichtung gemäss der Erfindung zum Einsatz kommen kann,
Fig. 2 und 3 die Tragevorrichtung aus Figur 1 allein mit einer Kordel zur Befestigung an einem Musikinstrument sowie Tragriemen für den Nacken, sowie mit der erfindungsgemässen Vorrichtung zur Längenverstellung der Kordel,

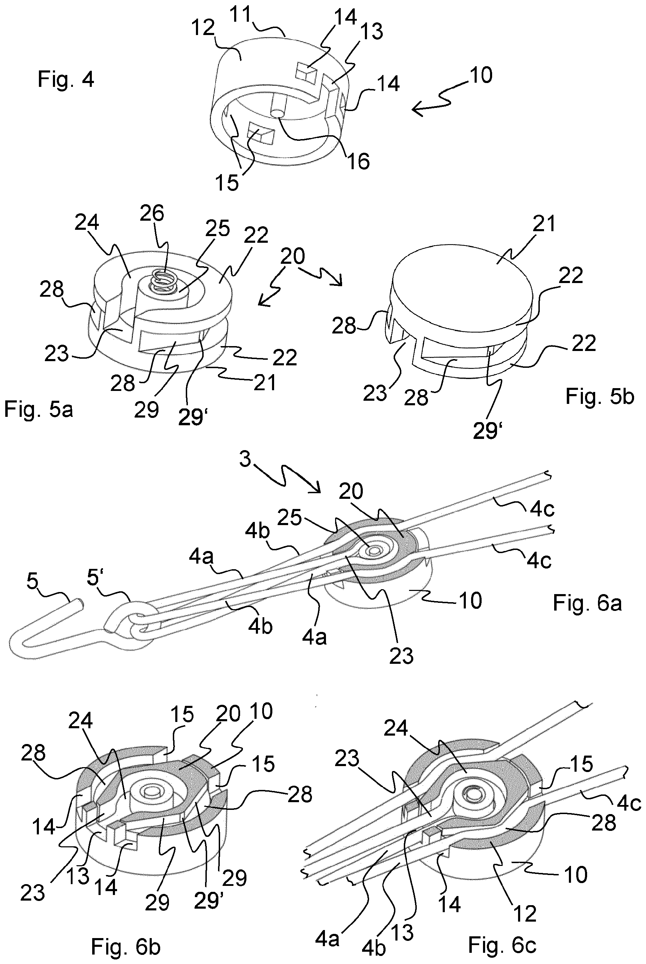

Fig. 4 ein becherförmiger, erster Teil der erfindungsgemässen Vorrichtung gemäss Figur 2 und 3 zur Längenverstellung der Kordel in einer Ansicht in Perspektive,
Fig. 5a ein Einsatz der Vorrichtung nach Figur 2 und 3 in einer ersten Ansicht in Perspektive von unten,
Fig. 5b der Einsatz von Figur 5a in einer zweiten Ansicht in Perspektive von oben,
Fig. 6a eine Ansicht des Einsatzes aus Figur 5a und 5b eingesetzt im ersten Teil in einem Schnitt auf halber Höhe durch den Einsatz sowie darin angeordnete Kordelstücke, die durch die Öse eines Hakens geführt sind,
Figur 6b den Einsatz und ersten Teil aus Figur 6a ohne die Kordelstücke,
Figur 6c eine vergrösserte Ansicht des Einsatzes und ersten Teil von Figur 6a,

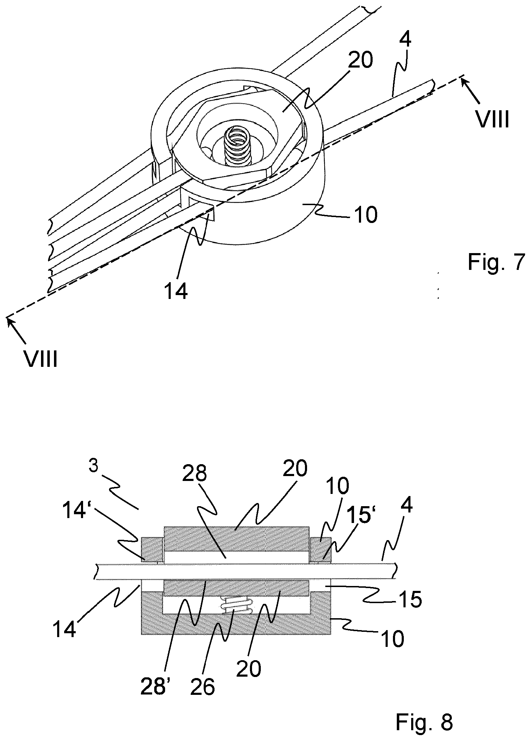

Figur 7 eine Ansicht eines Schnitts der erfindungsgemässen Vorrichtung mit zusammengesetztem erstem Teil und Einsatz, wobei der Schnitt auf Höhe des oberen Rands des becherförmigen Teils und der Führungsnuten des Einsatzes liegt,
Figur 8 eine Ansicht gemäss dem Schnitt VIII-VIII in Figur 7 der Vorrichtung mit den beiden ineinander gesetzten Teilen und einem Kordelstück, das bei entspannter Feder festgeklemmt ist.

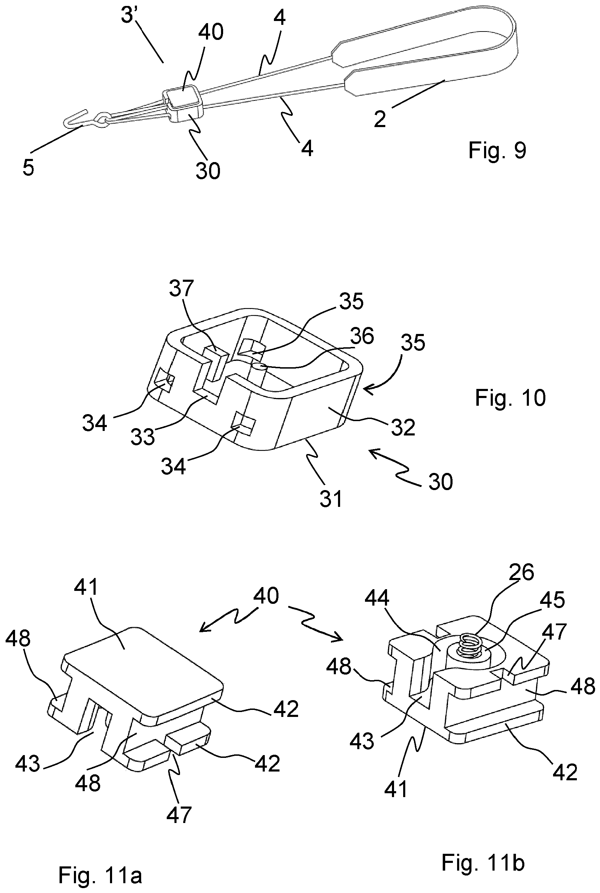

Zudem zeigen Figuren 9-14
eine Variante der ersten Ausführung der erfindungsgemässen Vorrichtung.

Davon zeigen:
Figur 9 eine Tragevorrichtung mit einer Kordel zur Befestigung an einem Musikinstrument und Trageriemen für den Nacken sowie mit der Variante der ersten Ausführung der erfindungsgemässen Vorrichtung zur Längenverstellung der Kordel,
Figur 10 ein becherförmiger, erster Teil der Variante der ersten Ausführung der erfindungsgemässen Vorrichtung gemäss Figur 9 in einer Ansicht in Perspektive von oben,
Fig. 11a ein Einsatz der Vorrichtung nach Figur 9 in einer ersten Ansicht in Perspektive von oben,
Fig. 11b den Einsatz von Figur 9 in einer zweiten Ansicht in Perspektive von unten,

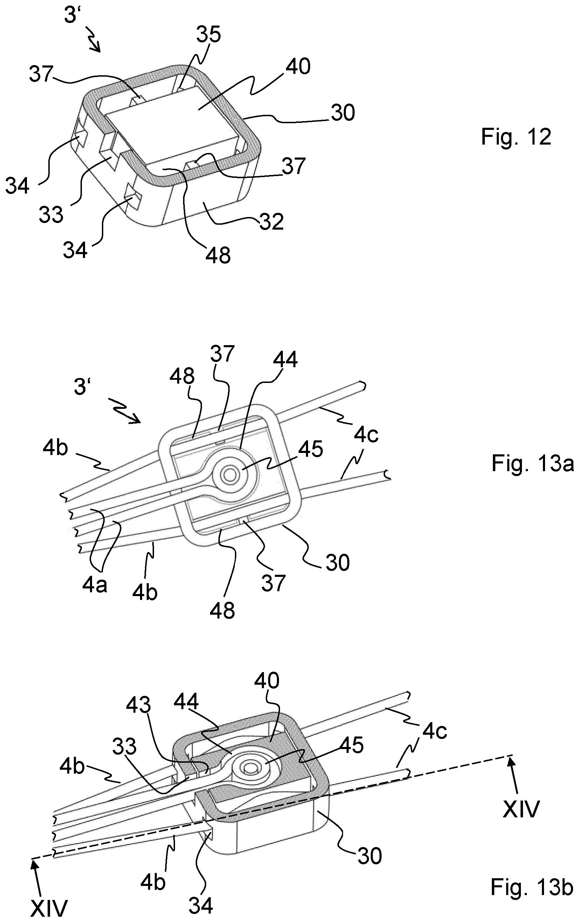

Fig. 12 eine Ansicht in Perspektive des Einsatzes aus Figur 11a und 11b eingesetzt im ersten Teil in einem Schnitt unterhalb des oberen Rands des Einsatzes,
Figur 13a eine Ansicht in Perspektive des Einsatzes aus Figur 12 eingesetzt im ersten Teil in einem Schnitt auf halber Höhe durch den Einsatz sowie darin angeordnete Kordelstücke,
Figur 13b eine Ansicht von oben des Einsatzes aus Figur 12 eingesetzt im ersten Teil in einem Schnitt auf halber Höhe durch den Einsatz sowie darin angeordnete Kordelstücke,

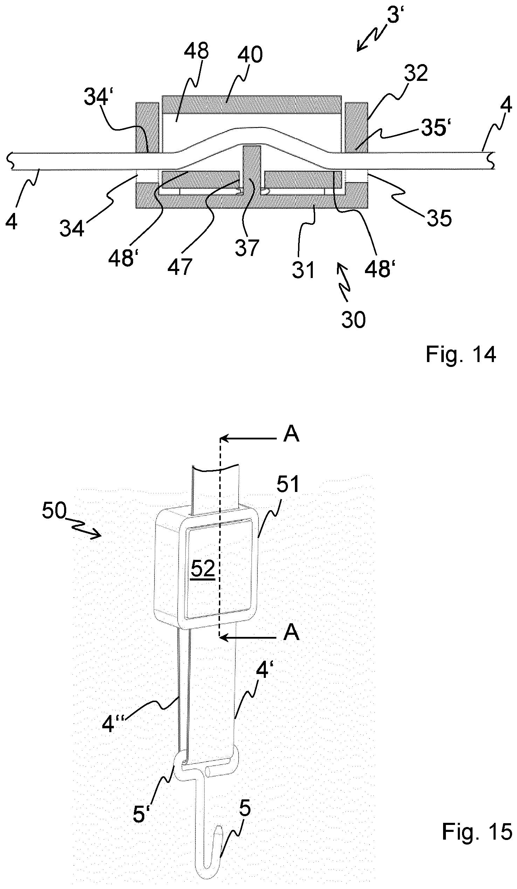

Figur 14 eine Ansicht gemäss dem Schnitt XIV-XIV in Figur 13b der Vorrichtung mit den beiden ineinander gesetzten Teilen und einem Kordelstück, das bei entspannter Feder festgeklemmt ist.
Figur 15 ein Beispiel einer zweiten Ausführung der Erfindung, eine Vorrichtung zur Längenverstellung von Bändern oder Flachkordeln.

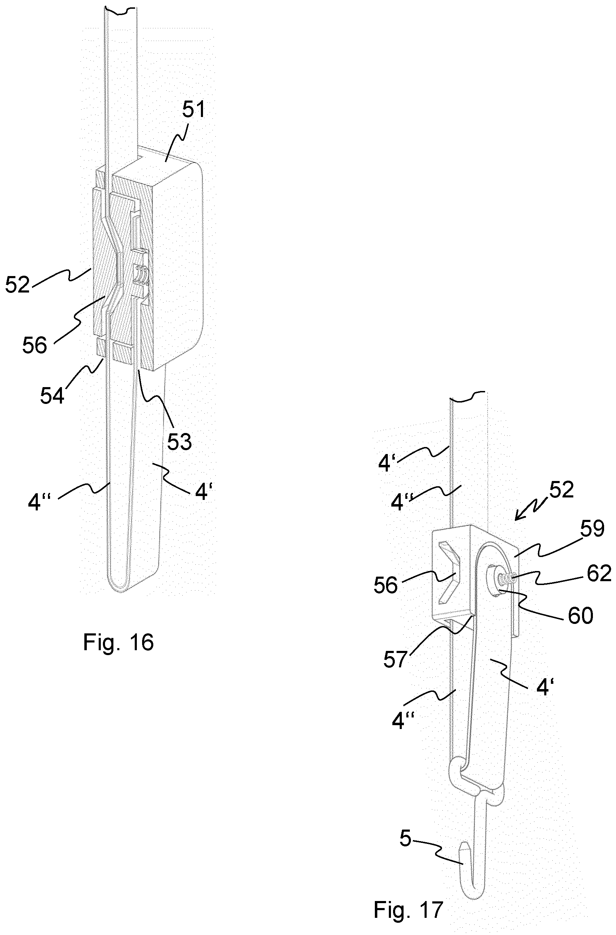

Figur 16 einen Querschnitt entlang A-A der Vorrichtung von Figur 15 um eine vertikale Achse gedreht.
Figur 17 den Einsatz der Vorrichtung von Figur 15 mit eingelegten Bändern.

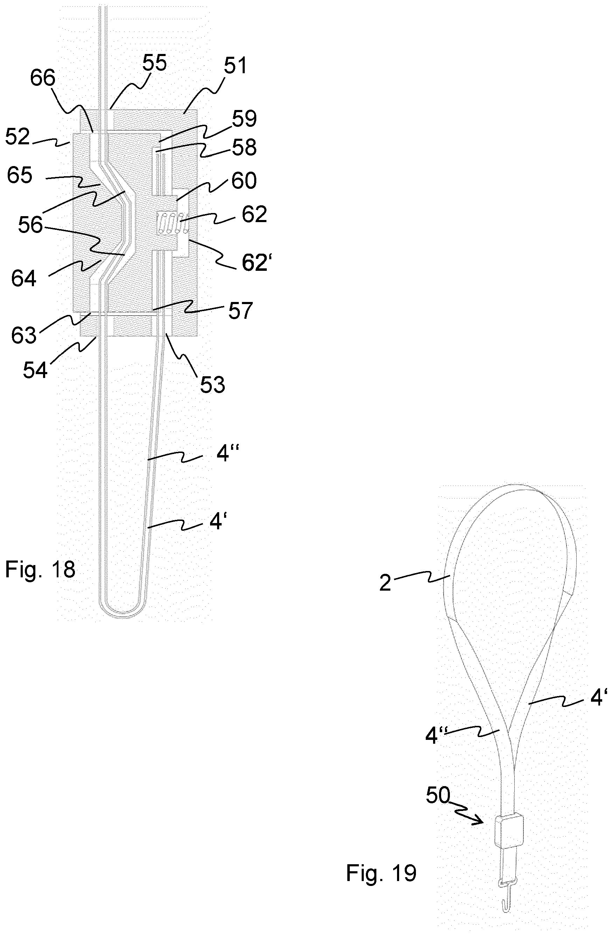

Figur 18 eine Vergrösserung des Querschnitts aus Figur 16.
Figur 19 die Vorrichtung gemäss zweiter Ausführung mit Tragegurt.

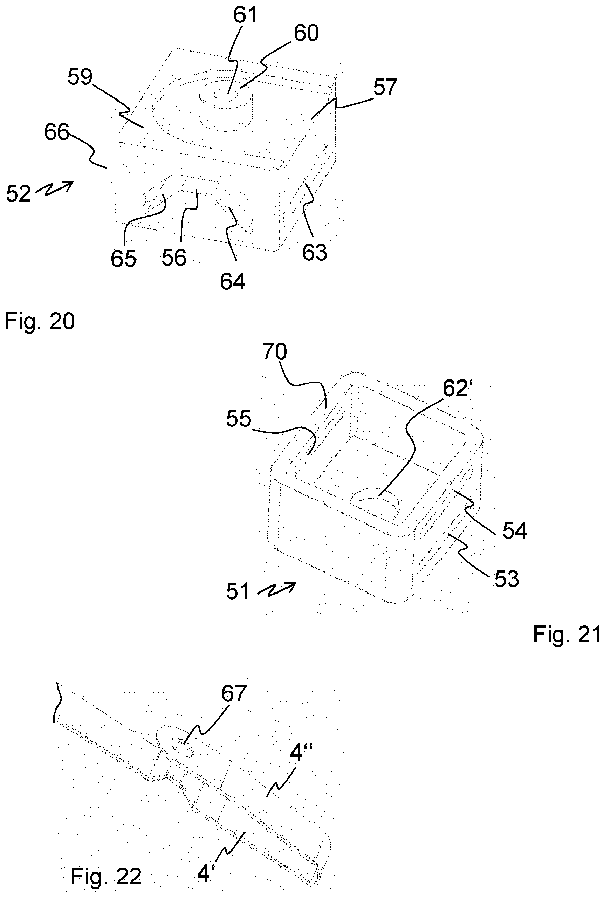

Figur 20 den Einsatz der Vorrichtung aus Figur 15.
Figur 21 den becherförmigen Teil der Vorrichtung aus Figur 15.
Figur 22 die Form der übereinander gelegten Bänder, wenn in die Vorrichtung aus Figur 15 gelegt.

In den Figuren sind für dieselben Elemente jeweils dieselben Bezugszeichen verwendet worden und erstmalige Erklärungen betreffen alle Figuren, wenn nicht ausdrücklich anders erwähnt.

### Ausführungsbeispiele der Erfindung

Figuren 1 bis 2 zeigen eine Tragevorrichtung 1 für beispielsweise ein Saxophon oder ähnliches Blasinstrument M mit Trageriemen 2 (auch Tragegurt genannt), die der Musiker um den Nacken trägt und an dessen Enden eine Kordel 4 befestigt ist. Die Kordel 4 führt in eine erfindungsgemässe Vorrichtung 3 zur Längenverstellung der Kordel 4, wobei die Kordel 4 am unteren Ende der Vorrichtung 3 wieder herausführt und in doppelter Schlinge durch die Öse eines Hakens 5 geführt ist. Der Haken 5 lässt sich am Musikinstrument M einhaken und befestigen

Figur 3 zeigt die Tragevorrichtung 1 etwas vergrössert und insbesondere zwei Teile der Vorrichtung 3, einen äusseren ersten Teil 10 und einen inneren zweiten Teil 20. Einfach geführte Kordelstücke 4 führen vom Trageriemen 2 durch Öffnungen in den Teilen 10 und 20 am oberen Ende der Vorrichtung 3 in diese hinein. Doppelt geführte Kordelstücke 4 führen durch weitere Öffnungen in den Teilen 10 und 20 am unteren Ende der Vorrichtung 3 zur Öse 5' des Hakens 5.

Figur 4 zeigt einen becherförmigen, ersten Teil 10 der erfindungsgemässen Vorrichtung aus den Figuren 1-3, der in der gezeigten Ausführung rund gebildet ist und einen runden Boden 11 mit umlaufendem Rand 12 aufweist. An einer Stelle des umlaufenden Rands 12 ist eine Ausnehmung 13 für die Aufnahme eines doppelt geführten Kordelstücks angeordnet, das durch eine Nut mit Kehrtwendung im Einsatz, wie in Figur 5a gezeigt, geführt werden kann. Beidseits der Ausnehmung 13 sind zwei Öffnungen 14 angeordnet, durch die jeweils ein weiteres Kordelstück hindurch geführt werden kann. Gegenüber von den zwei Öffnungen 14 sind im umlaufenden Rand 12 zwei weitere Öffnungen 15 angeordnet, durch die die genannten Kordelstücke aus der erfindungsgemässen Vorrichtung herausgeführt werden können. In der Mitte im Innern des becherförmigen Teils 10 ist in dieser Ausführung ein Stift 16 angeordnet, der einer Positionierung einer Spiralfeder dient.

Figuren 5a und b zeigen einen Einsatz 20, der in den becherförmigen Teil aus Figur 4 eingesetzt werden kann. Der Einsatz 20 ist in seiner Form der Becherform des ersten Teils 10 angepasst und weist eine obere Fläche 21 und umlaufende Fläche 22 auf. An der umlaufenden Fläche 22 ist eine Ausnehmung 23 angeordnet. Wird der Einsatz 20 in den ersten Teil 10 eingesetzt, so wird der Einsatz 20 vom umlaufenden Rand 12 umschlossen und die Ausnehmungen 13 und 23 der beiden Teile 10 und 20 stimmen in ihrer Position überein.

Der Einsatz 20 weist eine Nut 24 auf, die sich von der Ausnehmung 23 weg erstreckt und eine Kehrtwendung in der Form eines U's oder eine andere ähnliche Wendung bildet, wobei die Wendung etwa 180° beträgt. In der Mitte des Einsatzes 20, umschlossen von der Nut 24, befindet sich ein Mittelteil 25 mit einer Vertiefung, in die eine Feder 26 platziert werden kann. Beim Einsetzen des Einsatzes 20 in den becherförmigen Teil 10 greift der Stift 16 in die Vertiefung sowie in die Feder 26 ein. Der Einsatz 20 weist zudem in der umlaufenden Fläche 22 in symmetrischer Anordnung zwei seitliche Führungsnuten 28 auf, die beidseits der Ausnehmung 23 beginnen und sich um einen Teil des Einsatzes 20 entlang der Fläche 22 erstrecken, wobei deren Enden sich vorzugsweise an der der Ausnehmung 23 gegenüberliegenden Seite des Einsatzes 20 befinden. Die Führungsnuten 28 dienen der Führung von Kordelstücken. Sie weisen erfindungsgemäss Elemente zur Umlenkung und Hemmung der Bewegung von Kordeln auf. In der gezeigten Ausführung sind diese Elemente in der Form von abgeschrägten Flächen 29, die aufeinander zuführen und in einer Spitze 29' aufeinander treffen.

In den Figuren 6a-c ist die Zusammensetzung der beiden Teile 10 und 20 dargestellt, wobei die Vorrichtung 3 aufgeschnitten gezeigt ist. Figur 6a und c zeigt zudem die Anordnung von Kordelstücken in der erfindungsgemässen Vorrichtung 3.

Zunächst wird ein Kordelstück 4a in den Einsatz 20, insbesondere in die Nut 24 mit der Kehrtwendung und um den Mittelteil 25 eingelegt. Die zwei Enden des Kordelstücks 4a führen sodann durch die Ausnehmung 23 des Einsatzes 20 sowie die Ausnehmung 13 des becherförmigen Teils 10 aus der Vorrichtung 3 heraus und werden durch die Öse 5' des Hakens 5 hindurchgeschnürt. Nach der Öse 5' führen die beiden Kordelstücke, nunmehr mit 4b bezeichnet, zurück zur Vorrichtung 3 und durch die Öffnungen 14 des becherförmigen Teils 10 und entlang den Führungsnuten 28 des Einsatzes 20. Die Kordelstücke 4b führen sodann an der gegenüberliegenden Seite aus den Führungsnuten 28 des Einsatzes 20 heraus und durch die Öffnungen 15 des becherförmigen Teils 10 aus der Vorrichtung 3 wieder hinaus. Danach führen die Kordelstücke, nunmehr mit 4c bezeichnet, zu einem Trageriemen oder einem Tragegestell wie in Figur 1-3 gezeigt. In den Führungsnuten 28 werden die Kordelstücke entlang den beiden zueinander laufenden Flächen 29 und um die Fläche 29' herum geführt, welche die Flächen 29 verbindet, wobei die Kordelstücke an der äusseren Seite der Nut 28 von der Innenfläche des umlaufenden Rands 12 des becherförmigen Teils 10 geführt sind. Die Eigenart der Erfindung ist die separate Führung der Kordelstücke 4a und 4b, indem diese durch separierte Öffnungen bzw. Ausnehmungen 13, 14 und 23 führen und das Kordelstück in der Nut 24 mit Kehrtwendung die Kordelstücke in den seitlichen Nuten 28 nicht berühren.

Wird die Länge der Kordel verändert, so wird die Länge der Kordelstücke 4a und 4b verändert, d.h. die Länge der doppelt geführten Kordel wird verlängert oder verkürzt. Entsprechend verändert sich auch die Länge des einfach geführten Stücks 4c. Bei einer Längenverstellung bleibt jedoch der Teil der Kordel, der in der Nut 24 mit Kehrtwendung sich befindet, stets an Ort. Es bewegen sich nur die Teile der Kordel, die durch die Führungsnuten 28 führen. Die Vorrichtung 3 lässt sich entlang der Kordelstücke in den Führungsnuten 28 bewegen, wenn der Einsatz 20 in den becherförmigen Teil 10 entgegen der Kraft der Feder 26 hineingedrückt wird, sodass die Öffnungen 14 und 15 mit den Ein- und Ausgängen der Führungsnuten 28 am meisten übereinstimmen. Dann lässt sich die Vorrichtung 3 nach oben oder unten bewegen bzw. die Kordellänge verkürzen oder verlängern. Wird der Druck auf den Einsatz 20 und auf die Feder 26 nachgelassen, so entspannt sich die Feder und der Einsatz 20 bewegt sich wieder etwas aus dem becherförmigen Teil 10 heraus. Dabei verengen sich die Ein- und Ausgänge der Führungsnuten 28 und die Kordelstücke werden zwischen den beiden Teilen 10 und 20 fest geklemmt.

Figur 8 zeigt die Vorrichtung 3 in einem Schnitt gemäss VIII-VIII in Figur 7 und stellt den Mechanismus des Festklemmens der Kordelstücke in der Vorrichtung 3 dar, wenn die Feder 26 entspannt ist. Nachdem die gewünschte Länge der Kordel ausgewählt worden ist, wird der Einsatz 20 durch die Feder 26 etwas aus dem becherförmigen Teil 10 herausgestossen. Dabei bewegt sich die Führungsnut 28 ebenfalls, sodass deren Ein- und Ausgänge über die Höhe der Öffnungen 14 und 15 des becherförmigen Teils 10 sich bewegen, und die Kordel 4 in der Führungsnut 28 wird zwischen dem Rand 14' und 15' der Öffnungen 14 bzw. 15 und der einen Fläche 28' der Führungsnut 28 im Einsatz 20 geklemmt. Dadurch wird die Bewegung der Kordel 4 arretiert.

Die Elemente zur Umlenkung der Kordel in den Führungsnuten, d.h. die schräg aufeinander führenden Flächen 29 der Führungsnuten 28 bewirken durch die Reibung, dass sich die Position der erfindungsgemässen Vorrichtung unter dem Gewicht des Musikinstruments nicht verändern kann. Bei grösserem Gewicht des Musikinstruments erhöht sich auch die Reibung in der Umlenkung. Die Feder 26 zwischen dem becherförmigen Teil 10 und dem Einsatz 20 der Vorrichtung dient hauptsächlich der Arretierung der Vorrichtung, wenn das Musikinstrument vom Musiker hoch gehalten wird und die Kordel nicht gespannt ist und die Umlenkung keine Reibung erzeugt.

Figuren 9-14 zeigen eine Variante der ersten Ausführung der erfindungsgemässen Vorrichtung 3'. Sie weist wiederum einen ersten, becherförmigen Teil 30 und einen darin einsetzbaren Einsatz 40 auf. Die Funktionsweise dieser Variante ist gleich wie die der Vorrichtung 3 aus Figuren 1-8. Die Form des becherförmigen Teils 30 sowie des Einsatzes 40 ist in dieser Variante eckig. Der Teil 30, wie in Figur 10 gezeigt, mit einem Boden 31 und umlaufenden Rand 32 weist wiederum im Rand 32 eine Ausnehmung 33 sowie je zwei Öffnungen 34 und 35 auf, durch die die Kordel geführt wird. Die zwei Öffnungen 34 sind beidseits der Ausnehmung 33 angeordnet, wobei die zwei weiteren Öffnungen 35 an der gegenüberliegenden Seite des Teils 30 liegen. In der Mitte des becherförmigen Teils 30 ist wiederum ein Stift 36 für die Positionierung einer Feder angeordnet.

Der dazugehörige Einsatz 40, wie in Figuren 11a und b gezeigt, mit einer oberen Fläche 41 und umlaufenden Seitenfläche 42 weist an einer Stelle eine Ausnehmung 43 auf, die in eine Nut 44 mit einer Kehrtwendung führt, wobei in der Mitte, umschlossen von der Nut ein Mittelteil 45 angeordnet ist. Der Mittelteil 45 besitzt eine Ausnehmung, in die die Feder 26 eingesetzt werden kann. Der Einsatz 40 weist beidseits der Ausnehmung 43 je eine seitlich verlaufende Führungsnut 48 auf, durch die eine Kordel geführt werden kann.

Bei zusammengesetzten Teilen 30 und 40 stimmen die Positionen der beiden Ausnehmungen 33 und 43 überein. Ebenso stimmen die Positionen der vier Öffnungen 34 und 35 des becherförmigen Teils 30 mit den Ein- und Ausgängen der Führungsnuten 48 des Einsatzes 40 überein. Bei der zusammengesetzten Vorrichtung 3', wie in der Figur 13a und b gezeigt, ist die Kordel wiederum in die Nut 44 mit Kehrtwendung platziert und durch die Ausnehmung 43 des Einsatzes 40 und durch die Ausnehmung 33 des becherförmigen Teils 30 geführt.

Die Elemente zur Hemmung und Umlenkung der Kordel in den Führungsnuten sind in diesem Ausführungsbeispiels durch Vorsprünge 37 im becherförmigen Teil 30 ausgebildet, die durch entsprechend positionierte Ausnehmungen 47 im Einsatz 40 eingreifen und in die Führungsnuten 48 hineinragen. Die Vorsprünge 37 sind in der Figur 10 und 12 dargestellt. Die entsprechenden Ausnehmungen 47 in den Führungsnuten 48 des Einsatzes 40 sind in den Figuren 11a und b gezeigt und in Figur 13a angedeutet. Dabei führen die Kordelstücke 4a und 4b zu einem Musikinstrument und die Kordelstücke 4c wiederum zu einem Trageriemen oder Tragegestell am Musiker. Die in den Führungsnuten 48 platzierten Kordelstücke werden über die Vorsprünge 37 geführt und dadurch umgelenkt, wie es in der Figur 13b gezeigt ist. Die Umlenkung ist in diesem Beispiel in der Richtung senkrecht zum Boden 31 des Teils 30 und der Fläche 41 des Einsatzes 40. Im Beispiel gemäss den Figuren 1-9 ist die Umlenkung hingegen in einer Richtung parallel zu den Bodenflächen 11 und 21 der beiden Teile 10 und 20. Deren Funktion der Bewirkung einer Reibung zur Erhöhung der Stabilität der Vorrichtung ist in beiden Ausführungsbeispielen die gleiche.

Figur 14 zeigt in einem Querschnitt die Umlenkung der Kordel 4 mittels der Vorsprünge 37, die durch die Ausnehmung 47 in die Führungsnut 48 hineinragt. Die Figur zeigt die Situation mit gepresster Feder. Wird die Feder entspannt, so hebt sich der Einsatz 40 und die Kordel wird, wie beim Beispiel in Figur 8, zwischen dem oberen Rand 34' und 35' der Öffnung 34 bzw. 35 und der unteren Fläche 48' der Führungsnut 48 eingeklemmt und arretiert.

Figur 15 zeigt die Vorrichtung 50 gemäss der zweiten Ausführung für die Verwendung mit Flachkordeln oder Bändern. Die Vorrichtung 50 zur Längenverstellung von Bändern oder Flachkordeln 4', 4" weist wiederum einen äusseren, becherförmigen Teil 51 und einen Einsatz 52 auf. Die Flachkordeln oder Bänder 4', 4", beispielsweise gewobene Bänder, führen durch eine Öse 5' mit einem Haken 5, der an einem Musikinstrument, z.B. einem Saxophon, befestigt werden kann.

Nachfolgend versteht sich, dass mit dem Begriff "Bänder" sowohl Bänder als auch Flachkordeln gemeint sind.

Figur 16 zeigt die Führung der Bänder 4', 4" durch die beiden Teile 51 und 52. Hierzu weist der becherförmige Teil 51 eine Eingangsöffnung 53 und der Einsatzteil eine erste Öffnung 54 und eine zweite, gegenüberliegende Öffnung 55 auf. Diese haben einen länglichen Querschnitt, der einem Band angepasst ist. Die Enden der Bänder 4', 4" werden im Einsatzteil 52 in einer Nut mit einer Ausnehmung gehalten, durch die die Bänder 4', 4" herausgeführt werden. Der Einsatz 52 weist zudem einen Kanal 56 auf, in diesem Fall einen Durchgang 56.

Figur 17 zeigt den Einsatzteil 52 mit einer Ausnehmung 57, in die zwei aufeinander gelegte Bänder 4', 4" hineingelegt werden, die eine Nut 58 mit einer Kehrtwendung in der Form eines U führt. Die Nut 58 wird durch den umlaufenden Rand 59 des Einsatzes 52 und einen Mittelteil 60 gebildet. Im Mittelteil 60 befindet sich eine Vertiefung 61 für den Einsatz einer Feder 62 (siehe Figur 18). Die Bänder 4', 4" weisen nahe ihren Enden ein Loch auf, das über den Mittelteil 60 mit der Feder 62 gelegt wird, wodurch die Bänder dort festgehalten sind.

Figur 18 zeigt die Führung der Bänder 4', 4" in den beiden Teilen 51 und 52. Die beiden Bänder 4', 4" sind in der Nut 58 angeordnet, indem ihr Loch über dem Mittelteil 62 platziert ist, wobei der Mittelteil 62 in eine Vertiefung 62' im Boden des becherförmigen Teils 51 eingreift. Die Bänder 4', 4" führen von der Nut 58 durch die Ausnehmung 57 des Einsatzes 52 durch die Eingangsöffnung 53 im becherförmigen Teil 51 aus der Vorrichtung 50 hinaus. Nach Durchlaufen einer Öse (wie in Figur 15 gezeigt) führen die Bänder durch die erste Öffnung 54 des becherförmigen Teils 51 in die Vorrichtung 50 hinein und durch den Eingang 63 in den Durchgang 56 im Einsatz 52 hinein. Im Durchgang 56 werden die Bänder 4', 4" über Elemente zur Hemmung ihrer Bewegung geführt, die in diesem Beispiel durch zueinander angewinkelte Flächen 64 und 65 ausgebildet sind, die über eine weitere Fläche miteinander verbunden sind. Über einen Ausgang 66 des Durchgangs 56 führen die Bänder zur zweiten Öffnung 55 des becherförmigen Teils 51 aus der Vorrichtung hinaus. Die beiden Bänder 4', 4" führen sodann zu einem Tragegurt 2 wie in Figur 19 gezeigt, der sich um den Nacken eines Musikers legen lässt.

Figur 20 zeigt den Einsatzteil 52 in Perspektive mit der Nut 58 mit Mittelteil 60 zur Festhaltung der Bänder. Im Mittelteil 60 ist die Vertiefung 61 zur Platzierung einer Feder gezeigt. Eine Ausnehmung 57 im umlaufenden Rand 59 des Einsatzteils 52 führt in die Nut und aus der Nut 58 heraus. Neben der Ausnehmung 57 und getrennt von der Ausnehmung 57 ist der Eingang 63 zum Durchgang 56 angeordnet. Zudem sind im Durchgang 56 die zueinander angewinkelten Flächen 64 und 65 gezeigt, welche die Bewegung der Bänder durch den Durchgang hemmen. Der Ausgang 66 aus dem Durchgang 56 befindet sich an der hinteren Seite des Einsatzteils 52.

Figur 21 zeigt den becherförmigen, äusseren Teil 52 in Perspektive und insbesondere in seinem umlaufenden Rand 70 die Eingangsöffnung 53 sowie die davon getrennte erste Öffnung 54. Die zweite Öffnung 55 befindet sich an der hinteren Seite des becherförmigen Teils 51. Die Öffnungen 53, 54 und 55 stimmen beim Zusammensetzen der beiden Teile 51 und 52 mit der Ausnehmung 57 bzw. mit dem Eingang 63 bzw. mit dem Ausgang 66 des Durchgangs 56 überein. D.h. bei entspannter Feder stimmen diese Öffnungen zum Teil miteinander überein, sodass die Bänder in den Öffnungen festgeklemmt werden. Bei zusammengedrückter Feder stimmen diese Öffnungen in ihren Querschnitten vollständig miteinander überein, sodass die Bänder bewegt werden können. Im Boden des äusseren Teils 52 ist die Vertiefung 62' angeordnet, in die der Mittelteil 60 hineinpasst.

Figur 22 zeigt die Form der Bänder 4', 4" wie sie übereinander gelegt in der Vorrichtung 50 liegen würden. Nahe ihren Enden weisen sie ein Loch 67 auf, das über den Mittelteil 60 gelegt werden kann.

### Bezugszeichenliste

- 1: Tragevorrichtung zum Tragen eines Musikinstruments
- 2: Trageriemen/Tragegurt
- 3: Vorrichtung zur Längenverstellung einer Kordel
- 3': Variante der ersten Ausführung der Vorrichtung zur Längenverstellung einer Kordel
- 4: Kordel
- 4a,b,c: Kordelstück
- 4', 4": Flachkordel, Band
- 5: Haken
- 5': Öse
- 10: erster, äusserer Teil der Vorrichtung zur Längenverstellung, becherförmiger Teil
- 11: Boden des ersten Teils
- 12: umlaufender Rand des ersten Teils
- 13: Ausnehmung
- 14: Öffnungen am unteren Rand des ersten Teils
- 15: Öffnungen am oberen Rand des ersten Teils
- 16: Stift
- 20: zweiter, innerer Teil der Vorrichtung zur Längenverstellung, Einsatzteil
- 21: obere Fläche des zweiten Teils, Einsatzteils
- 22: umlaufende Fläche des zweiten Teils
- 23: Ausnehmung
- 24: Nut mit Kehrtwendung
- 25: Mittelteil der Nut 24 mit Ausnehmung für Feder
- 26: Feder
- 27: seitliche Führungsnut
- 28: innere Wandung von seitlicher Führungsnut
- 28': Fläche der Führungsnut 28
- 29: Element zur Umlenkung /Hemmung der Bewegung der Kordel
- 29': Verbindung zwischen Flächen 29
- 30: becherförmiger, erster Teil
- 31: Boden
- 32: umlaufender Rand
- 33: Ausnehmung
- 34: Öffnungen am unteren Ende
- 35: Öffnungen am oberen Ende
- 36: Stift
- 37: Element zur Hemmung der Bewegung der Kordel, Vorsprung
- 40: Einsatzteil
- 41: obere Fläche
- 42: umlaufende Randfläche
- 43: Ausnehmung
- 44: Führungsnut mit Kehrtwendung
- 45: Mittelteil der Nut mit Ausnehmung für Feder
- 47: Ausnehmung für Vorsprung 37
- 48: seitliche Führungsnut
- 48': Fläche der Führungsnut 48

- 50: Vorrichtung zweite Ausführung
- 51: becherförmiger Teil
- 52: Einsatzteil
- 53: Eingangsöffnung
- 54: erste Öffnung
- 55: zweite Öffnung
- 56: Durchgang
- 57: Ausnehmung
- 58: Nut
- 59: umlaufender Rand
- 60: Mittelteil
- 61: Vertiefung
- 62: Feder
- 63: Eingang zu Durchgang
- 64: angewinkelte Fläche
- 65: angewinkelte Fläche
- 66: Ausgang aus Durchgang
- 67: Loch in Band

## Patentansprüche

1. Eine Vorrichtung (3, 3') zur Längenverstellung einer Kordel (4) weist einen becherförmig ausgebildeten, ersten Teil (10, 30) und einen Einsatz (20, 40) als zweiten Teil auf, wobei die beiden Teile (10, 20, 30, 40) ineinander schiebbar sind und zwischen den beiden Teilen (10, 20, 30, 40) eine Feder (26) angeordnet ist **dadurch gekennzeichnet, dass**
der becherförmige, erste Teil (10, 30) in einem umlaufenden Rand (12, 32) eine erste Ausnehmung oder Eingangsöffnung zwecks Hindurchführung (13, 33) von zwei Kordelstücken (4, 4a) sowie vier weiteren Öffnungen (14, 15, 34, 35) für zwei Kordelstücke (4, 4b, 4c) aufweist, wobei die erste und zweite der vier Öffnungen (14, 34) neben der ersten Ausnehmung oder Eingangsöffnung (13, 33) und dritte und vierte Öffnungen (15, 35) gegenüberliegend von der ersten und zweiten Öffnung (14, 34, ) im umlaufenden Rand (12, 32) angeordnet sind,
wobei der Einsatz (20, 40) eine Nut (24, 44) mit einer Kehrtwendung aufweist, die durch einen umlaufenden Rand (22, 42) des Einsatzes (20, 40) und einen Mittelteil (25, 45) gebildet wird, und der umlaufende Rand (22, 42) eine zweite Ausnehmung (23, 43) aufweist, die in die Nut (24, 44) hineinführt, und der Einsatz (20, 40) an der Aussenseite seines umlaufenden Rands (22, 42) und beidseits der zweiten Ausnehmung (23, 43) je eine seitliche Führungsnut (28, 24) mit jeweils einem Eingang und einem Ausgang für je ein Kordelstück (4) aufweist, wobei die Führungsnuten (28, 48) jeweils Elemente (29, 37) zur Umlenkung und zur Hemmung der Bewegung einer Kordel aufweisen und die Führungsnuten (28, 48 von der Nut (24, 44) mit der Kehrtwendung vollständig getrennt ist,
und wobei die ersten und zweiten Ausnehmungen und die vier Öffnungen so angeordnet sind, dass, wenn der Einsatz im becherförmigen Teil eingesetzt ist und die Feder zusammengedrückt ist, die Position der zweiten Ausnehmung im Einsatz mit der Position der ersten Ausnehmung im becherförmigen Teil übereinstimmt und die Positionen der vier Öffnungen im becherförmigen Teil mit den Positionen der Eingänge und Ausgänge der seitlichen Führungsnuten im Einsatz übereinstimmen.

2. Vorrichtung (3, 3') nach Anspruch 1
**dadurch gekennzeichnet, dass**
der Einsatz (20, 40) in seinem Mittelteil (25, 45) eine Ausnehmung zur Aufnahme der Feder (26) aufweist.

3. Vorrichtung (3) nach Anspruch 1 oder 2
**dadurch gekennzeichnet, dass**
die Elemente zur Hemmung der Bewegung einer Kordel (4) durch die Führungsnuten (28) durch zueinander angewinkelte Flächen (29) ausgebildet sind.

4. Vorrichtung (3') nach Anspruch 1 oder 2
**dadurch gekennzeichnet, dass**
die Elemente zur Umlenkung und Hemmung der Bewegung einer Kordel (4) durch die Führungsnuten (48) Vorsprünge (37) im becherförmigen, ersten Teil (30) und Ausnehmungen (47) im Einsatz (40) umfassen, wobei die Vorsprünge (37) im Innern des becherförmigen, ersten Teils (30) sich senkrecht von dessen Bodenfläche weg erstrecken und die Ausnehmungen (47) im Einsatz (40) in dessen umlaufenden Rand 42) angeordnet sind und die Vorsprünge (37) in die Ausnehmungen (47) eingreifen und in die Führungsnuten (48) hineinragen.

5. Vorrichtung (3, 3') nach einem der Ansprüche 2-4
**dadurch gekennzeichnet, dass**
der becherförmige Teil (10, 30) in seinem Innern einen Stift (16, 36) zur Fixierung der Position sowie Ausrichtung der Feder (26) und der Einsatz (20, 40) in seinem Mittelteil (25, 45) eine Ausnehmung aufweist, in die der Stift (16, 36) eingreift.

6. Eine Vorrichtung (50) zur Längenverstellung einer Flachkordel oder eines Bandes (4', 4") mit jeweils einem Loch nahe ihren freien Enden aufweisend einen becherförmig ausgebildeten, ersten Teil (51) und einen Einsatz (52) als zweiten Teil, wobei die beiden Teile (51, 52) ineinander schiebbar sind und zwischen den beiden Teilen (51, 52) eine Feder (62) angeordnet ist,
**dadurch gekennzeichnet, dass**
der becherförmige, erste Teil (51) eine Eingangsöffnung (53) zwecks Hindurchführung von zwei Flachkordelstücken oder von zwei Bändern (4', 4") aufweist und an seinem umlaufenden Rand zwei weitere Öffnungen (54, 55) angeordnet sind, wovon die erste Öffnung (54) neben der Eingangsöffnung (53) und die zweite Öffnung (55) gegenüberliegend der ersten Öffnung (54) am umlaufenden Rand des becherförmigen Teils (51) angeordnet ist und der Einsatz (52) eine Ausnehmung (57), die eine Nut (58) mit einer Kehrtwendung führt, und einen als Durchgang (56) ausgebildeten Kanal aufweist, der von einem Eingang (63), der neben der Ausnehmung (57) angeordnet ist, zu einem dem Eingang (63) gegenüberliegenden Ausgang (66) führt, wobei der Durchgang (56) Elemente (64, 65) zur Umlenkung und Hemmung der Bewegung von Flachkordeln oder von Bändern aufweist und die Nut (58) vollständig vom Eingang (63) des Kanals (56) getrennt ist,
und wobei der becherförmige Teil (51) in seinem Boden eine Vertiefung (62') und der Einsatz (52) einen Mittelteil (60) zur Aufnahme der Feder (62) aufweist, wobei der Mittelteil (60) mit der Feder (62) durch das Loch in den freien Enden von übereinandergelegten und in die Vorrichtung platzierbaren Bändern oder Flachkordeln (4', 4") in die Vertiefung (62') eingreift und dadurch die Bänder oder Flachkordeln (4, 4') festhält.

7. Vorrichtung (50) nach Anspruch 6
**dadurch gekennzeichnet, dass**
die Elemente zur Hemmung der Bewegung einer Kordel (4', 4") durch den Durchgang (56) durch zueinander angewinkelte Flächen (64, 65) ausgebildet sind.

8. Vorrichtung (50) nach einem der Ansprüche 6-7
**dadurch gekennzeichnet, dass**
der becherförmige Teil (51) in seinem Innern einen Stift zur Fixierung der Position sowie Ausrichtung der Feder (62) und der Einsatz (52) in seinem Mittelteil (60) eine Ausnehmung (61) aufweist, in die der Stift eingreift.

9. Tragevorrichtung (1) für das Tragen eines Musikinstruments (M) mit einer Vorrichtung (3, 3, 50) gemäss einem der Ansprüche 1-5 sowie mit einem Trageriemen (2) für den Nacken oder einem Tragegestell für Schultern, einer Kordel (4) sowie einer Befestigung (5) der Kordel (4) am Musikinstrument (M).

10. Tragevorrichtung (1) nach Anspruch 9,
wobei die Befestigung der Kordel (4) am Musikinstrument (M) ein Haken (5) mit einer Öse (5') ist.

11. Tragevorrichtung (1) für das Tragen eines Musikinstruments (M) mit einer Vorrichtung (3, 3, 50) gemäss einem der Ansprüche 6-8 sowie mit einem Trageriemen (2) für den Nacken oder einem Tragegestell für Schultern, einem Band (4', 4") mit jeweils einem Loch nahe den freien Enden des Bands (4', 4"), sowie einer Befestigung (5) des Bands (4', 4") am Musikinstrument (M).

## Claims

1. Device (3, 3') for adjusting the length of a cord (4) comprises a cup-shaped first part (10, 30) and an insert (20, 40) as the second part, wherein the two parts (10, 20, 30, 40) are able to be pushed into one another and a spring (26) is arranged between the two parts (10, 20, 30, 40), **characterized in that** the cup-shaped first part (10, 30) comprises in a circumferential edge (12, 32) a first recess or entrance opening for the passage (13, 33) of two cord pieces (4, 4a) and four further openings (14, 15, 34, 35) for two cord pieces (4, 4b, 4c), wherein the first and second of the four openings (14, 34) are arranged adjacent to the first recess or entrance opening (13, 33) and third and fourth openings (15, 35) are arranged opposite the first and second opening (14, 34) in the circumferential edge (12, 32), wherein the insert (20, 40) comprises a groove (24, 44) having a turnaround formed by a circumferential edge (22, 42) of the insert (20, 40) and a central part (25, 45), and the circumferential edge (22, 42) comprises a second recess (23, 43) which leads into the groove (24, 44), and the insert (20, 40) on the outside of its circumferential edge (22, 42) and on both sides of the second recess (23, 43) each has a lateral guide groove (28, 24) with in each case an entrance and an exit for one cord piece (4) each, wherein the guide grooves (28, 48) each have elements (29, 37) for deflecting and for inhibiting the movement of a cord and the guide grooves (28, 48) are completely separated from the groove (24, 44) with the turnaround, and wherein the first and second recesses and the four openings are arranged such that when the insert is inserted in the cup-shaped part and the spring is compressed, the position of the second recess in the insert coincides with the position of the first recess in the cup-shaped part and the positions of the four openings in the cup-shaped part coincide with the positions of the entrances and exits of the lateral guide grooves in the insert.

2. Device (3, 3') according to claim 1, **characterized in that** the insert (20, 40) comprises in its central part (25, 45) a recess for accommodating the spring (26).

3. Device (3) according to claim 1 or 2, **characterized in that** the elements for inhibiting the movement of a cord (4) through the guide grooves (28) are formed by mutually angled surfaces (29).

4. Device (3') according to claim 1 or 2, **characterized in that** the elements for deflecting and inhibiting the movement of a cord (4) through the guide grooves (48) comprise projections (37) in the cup-shaped first part (30) and recesses (47) in the insert (40), wherein the projections (37) in the interior of the cup-shaped first part (30) extend perpendicularly away from the bottom surface thereof and the recesses (47) in the insert (40) are arranged in the circumferential edge (42) thereof and the projections (37) engage in the recesses (47) and project into the guide grooves (48).

5. Device (3, 3') according to one of claims 2-4, **characterized in that** the cup-shaped part (10, 30) comprises in its interior a pin (16, 36) for fixing the position as well as alignment of the spring (26), and the insert (20, 40) comprises in its central part (25, 45) a recess in which the pin (16, 36) engages.

6. A device (50) for adjusting the length of a flat cord or a strap (4', 4"), each having a hole near its free ends, comprising a cup-shaped first part (51) and an insert (52) as the second part, wherein the two parts (51, 52) are able to be pushed into one another and a spring (62) is arranged between the two parts (51, 52), **characterized in that** the cup-shaped first part (51) comprises an entrance opening (53) for the passage of two flat cord pieces or two straps (4', 4"), and two further openings (54, 55) are arranged on its circumferential edge, of which the first opening (54) is arranged next to the entrance opening (53) and the second opening (55) is arranged opposite the first opening (54) on the circumferential edge of the cup-shaped part (51), and the insert (52) has a recess (57) guiding a groove (58) with an inverted turn and comprises a channel in the form of a passage (56) which leads from an entrance (63) next to the recess (57) to an outlet (66) opposite the entrance (63), wherein the passage (56) comprises elements (64, 65) for deflecting and inhibiting the movement of flat cords or of straps and the groove (58) is completely separated from the entrance (63) of the channel (56), and wherein the cup-shaped part (51) has a recess (62') in its bottom and the insert (52) has a central part (60) for accommodating the spring (62), wherein the central part (60) engages in the recess (62') with the spring (62) through the hole in the free ends of superimposed straps or flat cords (4', 4") placeable in the device, thereby retaining the straps or flat cords (4, 4').

7. Device (50) according to claim 6, **characterized in that** the elements for inhibiting the movement of a cord (4', 4") through the passage (56) are formed by mutually angled surfaces (64, 65).

8. Device (50) according to one of claims 6 to 7, **characterized in that** the cup-shaped part (51) has in its interior a pin for fixing the position as well as alignment of the spring (62) and the insert (52) comprises in its central part (60) a recess (61) in which the pin engages.

9. Carrying device (1) for carrying a musical instrument (M) with a device (3, 3, 50) according to one of claims 1 to 5 as well as with a carrying strap (2) for the neck or a carrying frame for shoulders, a cord (4) as well as an attachment (5) of the cord (4) to the musical instrument (M).

10. Carrying device (1) according to claim 9, wherein the attachment of the cord (4) to the musical instrument (M) is a hook (5) with an eye (5').

11. Carrying device (1) for carrying a musical instrument (M), comprising a device (3, 3, 50) according to any one of claims 6 to 8 and comprising a carrying strap (2) for the neck or a carrying frame for shoulders, a strap (4', 4") with a hole near each of the free ends of the strap (4', 4"), and an attachment (5) of the strap (4', 4") to the musical instrument (M).

## Revendications

1. Dispositif (3, 3') pour le réglage en longueur d'une cordelière (4), présentant une première partie en forme de godet (10, 30) et un insert (20, 40) formant une deuxième partie, dans lequel les deux parties (10, 20, 30, 40) peuvent être insérées l'une dans l'autre et un ressort (26) est disposé entre les deux parties (10, 20, 30, 40), **caractérisé en ce que**
la première partie en forme de godet (10, 30) présente dans un bord périphérique (12, 32) un premier évidement ou une ouverture d'entrée pour le passage (13, 33) de deux longueurs de cordelière (4, 4a) et quatre autres ouvertures (14, 15, 34, 35) pour deux longueurs de cordelière (4, 4b, 4c), la première et la deuxième des quatre ouvertures (14, 34) étant disposées à côté du premier évidement ou ouverture d'entrée (13, 33) et les troisième et quatrième ouvertures (15, 35) en face des première et deuxième ouvertures (14, 34) dans le bord périphérique (12, 32),
l'insert (20, 40) présentant une rainure (24, 44) avec un retournement qui est formé par un bord périphérique (22, 42) de l'insert (20, 40) et par une partie médiane (25, 45), et le bord périphérique (22, 42) présentant un deuxième évidement (23, 43) donnant dans la rainure (24, 44), et l'insert (20, 40) présentant sur un côté extérieur de son bord périphérique (22, 42) et de part et d'autre du deuxième évidement (23, 43) une rainure de guidage latérale (28, 24) avec une entrée et une sortie pour une longueur de cordelière (4), les rainures de guidage (28, 48) présentant chacune des éléments (29, 37) pour la déviation et le blocage du mouvement d'une cordelière et les rainures de guidage (28, 48) étant complètement séparées de la rainure (24, 44) qui comporte le retournement,
et les premier et deuxième évidements et les quatre ouvertures sont disposés de telle manière que, lorsque l'insert est introduit dans la partie en forme de godet et le ressort est comprimé, la position du deuxième évidement dans l'insert coïncide avec celle du premier évidement dans la partie en forme de godet et les positions des quatre ouvertures dans la partie en forme de godet coïncident avec celles des entrées et des sorties des rainures de guidage latérales de l'insert.

2. Dispositif (3, 3') selon la revendication 1, **caractérisé en ce que** l'insert (20, 40) présente dans sa partie médiane (25, 45) un évidement destiné à recevoir le ressort (26).

3. Dispositif (3) selon la revendication 1 ou 2, **caractérisé en ce que** les éléments destinés à empêcher le mouvement d'une cordelière (4) à travers les rainures de guidage (28) sont formés par des surfaces (29) formant un angle l'une par rapport à l'autre.

4. Dispositif (3') selon la revendication 1 ou 2, **caractérisé en ce que** les éléments pour dévier une cordelière (4) et empêcher son déplacement à travers les rainures de guidage (48) comprennent des saillies (37) dans la première partie en forme de godet (30) et des évidements (47) dans l'insert (40), lesquelles saillies (37) s'étendent à l'intérieur de la première partie en forme de godet (30) et s'éloignent perpendiculairement de sa surface de fond et les évidements (47) sont disposés dans l'insert (40) dans le bord périphérique 42) de celui-ci et les saillies (37) se mettent en prise dans les évidements (47) et dépassent dans les rainures de guidage (48).

5. Dispositif (3, 3') selon l'une des revendications 2 à 4, **caractérisé en ce que** la partie en forme de godet (10, 30) présente à l'intérieur une goupille (16, 36) destinée à fixer la position et l'orientation du ressort (26) et l'insert (20, 40) présente dans sa partie médiane (25, 45) un évidement dans lequel la goupille (16, 36) se met en prise.

6. Un dispositif (50) pour le réglage de la longueur d'une cordelière plate ou d'une sangle (4', 4") pourvue d'un trou près de son extrémité libre, comprenant une première partie en forme de godet (51) et un insert (52) constituant une deuxième partie, dans lequel les deux parties (51, 52) peuvent être insérées l'une dans l'autre et un ressort (62) est disposé entre les deux parties (51, 52), **caractérisé en ce que** la première partie en forme de godet (51) présente une ouverture d'entrée (53) destinée au passage de deux longueurs de cordelière plate ou de deux sangles (4', 4") et deux autres ouvertures (54, 55) sont disposées sur son bord périphérique, la première ouverture (54) étant disposée près de l'ouverture d'entrée (53) et la deuxième ouverture (55) en face de la première ouverture (54) sur le bord périphérique de la partie en forme de godet (51) et l'insert (52) présente un évidement (57), qui guide une rainure (58) avec un retournement et un canal conçu comme une traversée (56) qui va d'une entrée (63) située à côté de l'évidement (57) à une sortie (66) opposée à l'entrée (63), la traversée (56) présentant des éléments (64, 65) pour dévier des cordelières plates ou des sangles et en empêcher leur mouvement et la rainure (58) est complètement séparée de l'entrée (63) du canal (56),
la partie en forme de godet (51) présentant dans son fond un renfoncement (62') et l'insert (52) une partie médiane (60) destinée à recevoir le ressort (62), la partie médiane (60) avec le ressort (62) se mettant en prise dans le renfoncement (62') à travers le trou dans les extrémités libres de sangles ou de cordelières plates (4', 4") superposées qui peuvent être placées dans le dispositif et retenant ainsi les sangles ou cordelières plates (4, 4').

7. Dispositif (50) selon la revendication 6, **caractérisé en ce que** les éléments empêchant le mouvement d'une cordelière (4', 4") à travers la traversée (56) sont formés par des surfaces (64, 65) formant un angle l'une par rapport à l'autre.

8. Dispositif (50) selon l'une des revendications 6 à 7, **caractérisé en ce que** la partie en forme de godet (51) présente à l'intérieur une goupille destinée à fixer la position et l'orientation du ressort (62) et l'insert (52) présente dans sa partie médiane (60) un évidement (61) dans lequel la goupille se met en prise.

9. Dispositif de support (1) pour porter un instrument de musique (M) avec un dispositif (3, 3, 50) selon l'une des revendications 1 à 5 et avec une sangle de support (2) pour la nuque ou un harnais de support pour les épaules, une cordelière (4) et une fixation (5) de la cordelière (4) sur l'instrument de musique (M).

10. Dispositif de support (1) selon la revendication 9, dans lequel la fixation de la cordelière (4) sur l'instrument de musique (M) est un crochet (5) avec un œillet (5').

11. Dispositif de support (1) pour porter un instrument de musique (M) avec un dispositif (3, 3, 50) selon l'une des revendications 6 à 8 et avec une sangle de support (2) pour la nuque ou un harnais de support pour les épaules, une sangle (4', 4") avec un trou près de chaque extrémité libre de la sangle (4', 4") et une fixation (5) de la sangle (4', 4") sur l'instrument de musique (M).
